# EUROPÄISCHE PATENTSCHRIFT

(11) **EP 3 143 856 B1**
(45) Veröffentlichungstag und Bekanntmachung des Hinweises auf die Patenterteilung: **07.06.2023**
(21) Anmeldenummer: 16193183.7
(22) Anmeldetag: 21.10.2013
(51) Int. Cl.: A01C 7/10, A01C 21/00

(54) **VORRICHTUNG ZUM ERFASSEN VON MASSETEILCHEN**
DEVICE FOR DETECTING MASS PARTICLES
DISPOSITIF DE DÉTECTION DE CORPUSCULES

(43) Veröffentlichungstag der Anmeldung: 22.03.2017
(62) Teilanmeldung aus: 13802224.9
(73) Patentinhaber: Müller-Elektronik GmbH, 33154 Salzkotten (DE)
(72) Erfinder: Hilleringmann, Ulrich, 33181 Bad Wünnenberg (DE); Meyer zu Hoberge, Sebastian, 33106 Paderborn (DE); Liebich, Martin, 36287 Breitenbach (DE)
(74) Vertreter: Ostermann, Thomas

(56) Entgegenhaltungen:
- EP-A1- 1 341 122
- EP-A2- 0 158 985
- DE-A1- 10 036 304
- US-A- 3 527 928
- US-A1- 2012 227 647

## Beschreibung

Die Erfindung betrifft eine Vorrichtung zum Erfassen von Masseteilchen nach dem Oberbegriff des Patentanspruchs 1.

Ferner betrifft die Erfindung eine Sämaschine gemäß dem Oberbegriff des Patentanspruchs 5.

Aus der DE 10 2009 051 942 A1 ist eine Vorrichtung zum Erfassen von Masseteilchen in leitungsgeführten Luftströmen bekannt, bei der ein Sensorelement in einer Leitung integriert ist, wobei durch die Leitung ein die Masseteilchen enthaltener Luftstrom geführt wird. Zum Zählen der Masseteilchen weist das Sensorelement ein Piezoelement auf, das sich auf einer dem Inneren der Leitung abgewandten Seite einer Prallfläche anschließt. Die Prallfläche des Sensorelementes bildet somit eine Innenwandung der Leitung. An das Piezoelement schließen sich auf einer dem Inneren der Leitung abgewandten Seite ein Dämpfungskörper sowie ein starrer Basiskörper an. Es ist wünschenswert, dass das Sensorelement in der Leitung so positioniert ist, dass möglichst alle Masseteilchen einmalig auf die Prallfläche auftreffen und damit gezählt werden können. Ferner ist es wünschenswert, dass das Sensorelement schwingungsentkoppelt, staub- bzw. wasserdicht und verschmutzungsunanfällig in der Leitung gelagert ist.

Aus der EP 0 158 985 A2 ist eine Vorrichtung zum Erfassen von Masseteilchen in leitungsgeführten Luftströmen bekannt, bei der in einem Umlenkungsabschnitt der Leitung ein Sensorelement mit einem dahinter gelagerten Piezoelement angeordnet ist. Ein Dämpfungskörper ist in dem Sensorelement nicht integriert.

Aus der US 3 527 928 A ist eine Abführung für Saatgut bekannt, bei der das Saatgut in einer verjüngenden Leitung auf eine Prallfläche gelenkt wird. Ein Sensorelement ist nicht vorgesehen.

Aus der EP 1 341 122 A1 ist eine Vorrichtung zum Erfassen von Masseteilchen in leitungsgeführten Luftströmen bekannt, die ein Sensorelement in einem Umlenkungsabschnitt der Leitung aufweist. Das Sensorelement weist ein Piezoelement auf, an dessen beiden Seiten Belagscheiben angeordnet sind. Die Belagscheiben können aus einem steifen Material bestehen. Eine Dämpfungsfunktion kommt diesen Belagscheiben nicht zu.

Aus der DE 100 36 304 A1 ist eine Vorrichtung zum Erfassen von Masseteilchen in leitungsgeführten Luftströmen bekannt, wobei in der Leitung ein eingeschnittenes Sensorelement vorgesehen ist, das ein Piezoelement aufweist. Ein Dämpfungskörper ist in dem Sensorelement nicht integriert.

Aufgabe der vorliegenden Erfindung ist es daher, eine Vorrichtung zum Erfassen von Masseteilchen in leitungsgeführten Luftströmen sowie eine Sämaschine derart weiterzubilden, dass auf einfache Weise ein verbessertes Messergebnis erzielt wird, wobei insbesondere unterschiedlich ausgebildete Masseteilchen genau gezählt werden können, und dass ein Sensorelement montagefreundlich an der Leitung fixiert werden kann.

Zur Lösung dieser Aufgabe weist die Erfindung die Merkmale des Patentanspruchs 1 auf.

Nach der Erfindung ist ein Sensorelement in einem Umlenkungsabschnitt einer Leitung angeordnet, wobei sich ein stromaufwärts angeordneter Zuführungsabschnitt der Leitung sich in Richtung des Sensorelementes so verjüngt, dass alle in dem Zuführungsabschnitt geförderten Masseteilchen genau einmal auf die Prallfläche des Sensorelementes treffen. Durch diesen verjüngenden Leitungsabschnitt wird sichergestellt, dass alle Masseteilchen auf die Prallfläche des Sensorelementes treffen, das berührungssensitiv ausgebildet ist und darüber hinaus robust und unempfindlich gegenüber Verschmutzungen ist. In dem Zuführungsabschnitt erfolgt eine gerichtete Führung des die Masseteilchen aufweisenden Luftstroms, so dass alle Masseteilchen auf die Prallfläche treffen, ohne mittels des Luftstroms an dem Sensorelement bzw. der Prallfläche vorbeigeführt zu werden. Die mit der Verjüngung einhergehende Geschwindigkeitserhöhung des Luftstromes bewirkt ein gezieltes Auftreffen der Masseteilchen auf die Prallfläche mit einer solchen Geschwindigkeit, dass ein eindeutiges Zählen derselben gewährleistet ist. Durch die Geschwindigkeitserhöhung werden auch Masseteilchen auf die Prallfläche gelangt, die ansonsten nicht mit dem erforderlichen Druck auf die Prallfläche auftreffen würden. Handelt es sich bei den Masseteilchen um Saatgut, ermöglicht die Erfindung hohe Korndurchsätze in pneumatischen Drillmaschinen, wobei unterschiedliche Saatgüter, wie Raps, Weizen oder Mais, korngenau gezählt werden. Alle Zählobjekte bzw. Saatgüter berühren die Prallfläche genau einmal, wobei die Strömungsmechanik der Drillmaschine nur unwesentlich beeinträchtigt wird. Alternativ kann die Erfindung auch zur Saatflussüberwachung eingesetzt werden, wobei Verstopfungen bzw. Blockaden in der Strömung erkannt werden. Das Dämpfungselement ist vorzugsweise als eine Dämpfungsscheibe ausgebildet. Die Dämpfungsscheibe hat eine Doppelfunktion. Sie dient zum einen der Schlagbeanspruchung des Piezoelementes beim Auftreffen der Masseteilchen auf die Prallfläche. Zum anderen bewirken die elektrisch leitend ausgebildeten Verbindungselemente der Dämpfungsscheibe, dass eine elektrische Verbindung zum einen einer ersten Anschlussfläche des Piezoelementes an eine erste Anschlussfläche der Kontaktierungsscheibe und zum anderen einer zweiten Anschlussfläche des Piezoelementes an eine zweite Anschlussfläche der Kontaktierungsscheibe gewährleistet ist.

Nach einer bevorzugten Ausführungsform der Erfindung schließt sich an dem Umlenkungsabschnitt, in dem sich das Sensorelement befindet, ein sich in Strömungsrichtung erweiternder Weiterleitungsabschnitt der Leitung an, in den die auf die Prallfläche des Sensorelementes auftreffenden Masseteilchen umgelenkt werden. Dadurch, dass sich ein Querschnitt des Weiterleitungsabschnitts in Strömungsrichtung vergrößert, wird die Strömungsgeschwindigkeit der Luft und der Masseteilchen wieder reduziert, wobei Strömungsabrisse und Verwirbelungen minimiert werden, um Druckverluste zu vermeiden.

Nach einer Weiterbildung der Erfindung ist das Sensorelement außenseitig bezüglich des Umlenkungsabschnitts angeordnet. Die Prallfläche des Sensorelementes bildet quasi eine Umlenkfläche, die einem spitzen Winkel mit einer Mittelachse des Zuführungsabschnitts und des Weiterleitungsabschnitts einschließt. Hierdurch wird sichergestellt, dass die Masseteilchen jeweils nur einmalig auf die Prallfläche des Sensorelementes treffen, so dass eine Überzählung durch mehrmaliges Auftreffen der Masseteilchen verhindert wird. Aufgrund des erzwungenen Aufprallwinkels übertragen alle Zählobjekte (sowohl Feinsämereien als auch große Saatarten wie Mais) eine ausreichende kinetische Energie an die Prallplatte und werden nach dem Aufprall kollisionsarm weitergeleitet.

Zur Lösung der Aufgabe ist eine Sämaschine gemäß Anspruch 5 vorgesehen, die in einem Hauptstromverteiler und/oder in mindestens an einer Saatgutleitung ein Sensorelement aufweist. Hierdurch kann eine eindeutige und effektive Zählung von Saatkörnern gewährleistet werden.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: einen vergrößerten Querschnitt eines winkelförmigen Leitungsabschnittes, in dem zur vereinfachten Darstellung Bauelemente eines im Eckbereich angeordneten Sensorelementes explosionsartig nebeneinander dargestellt sind und
- Figur 2: eine schematische Vorderansicht der Bauelementen des Sensorelementes.

Eine Vorrichtung zum Erfassen von Masseteilchen in leitungsgeführten Luftströmen kann vorzugsweise in Sämaschinen oder Drillmaschinen integriert angeordnet sein. Darüber hinaus kann die erfindungsgemäße Vorrichtung auch in anderen Maschinen oder Einrichtungen integriert sein, in denen Masseteilchen durch Leitungen geführt werden und die Notwendigkeit besteht, die Masseteilchen zu zählen.

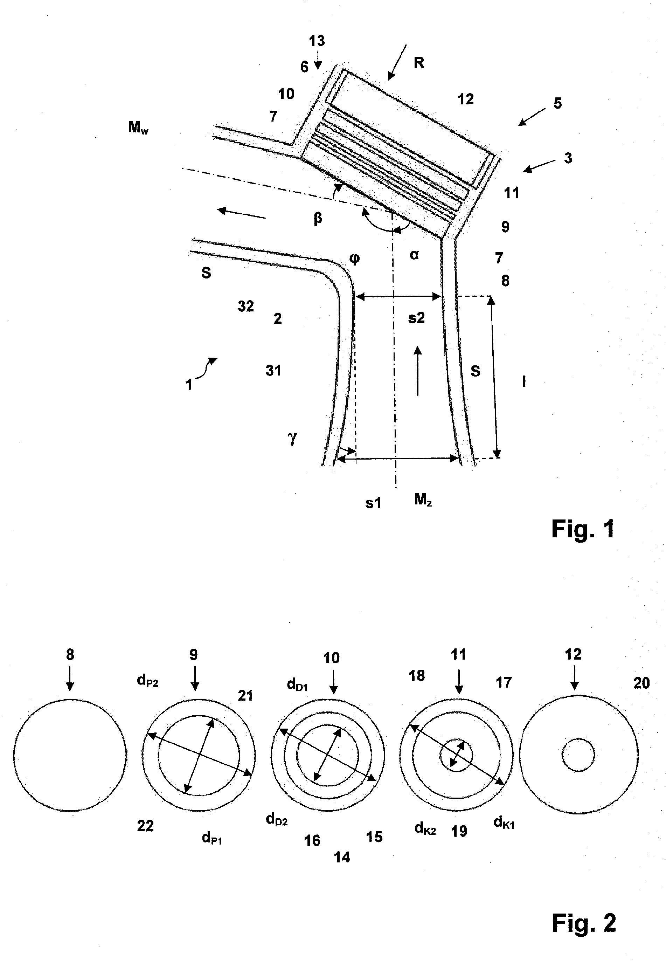

Eine nicht dargestellte Sämaschine weist einen Saatgutspeicher, eine Ausbringungseinrichtung zum Ausbringen von Saatgut aus dem Saatgutspeicher sowie ein Saatgutleitungssystem mit einem Hauptstromverteiler und mehreren einzelnen Leitungen auf. Die Leitung kann beispielsweise einen umlenkenden 1 Leitungsabschnitt aufweisen, der in Figur 1 näher dargestellt ist. Die Leitung bzw. der Leitungsabschnitt 1 kann als ein Rohr ausgebildet sein, in dem ein zu zählende Masseteilchen (Saatgutkörner) enthaltener Luftstrom in Strömungsrichtung S geführt transportiert wird. Das Rohr kann starr oder als ein flexibler Schlauch ausgebildet sein.

Der Leitungsabschnitt 1 weist einen Zuführungsabschnitt 31, einen Umlenkungsabschnitt 2 und einen Weiterleitungsabschnitt 32 auf. In dem Umlenkungsabschnitt 2 ist ein Sensorelement 3 zum Zählen der durch den Leitungsabschnitt 1 geleiteten Masseteilchen angeordnet ist.

Der Zuführungsabschnitt 31 und/oder der Weiterleitungsabschnitt 32 ist auf einer dem Umlenkungsabschnitt 2 abgewandten Seite mit einem nicht dargestellten geraden Leitungsabschnitt konstanten Durchmessers verbunden.

Der Leitungsabschnitt 1 ist winkelförmig angeordnet, wobei der Luftstrom im Umlenkungsabschnitt 2 von dem Zuführungsabschnitt 31 in Richtung des Weiterleitungsabschnittes 32 um einen stumpfen Winkel ϕ umgelenkt werden. An einem Außenbereich 5 des Umlenkungsabschnittes 2 ist das Sensorelement 3 angeordnet. Bauelemente des Sensorelementes 3 sind in einem Bohrungshals 6 des Umlenkungsabschnittes 2 angeordnet, wobei der Bohrungshals 6 in einem äußeren Eckbereich des Leitungsabschnittes 1 quer zu demselben abragt.

Das Sensorelement 3 ist vorzugsweise mittels eines Schraubverschlusses an dem Leitungsabschnitt 1 der Leitung 1 gelagert. Der Bohrungshals 6 weist in einem Fußbereich einen Anschlag 7 auf, an dem eine vorzugsweise scheibenförmige Prallfläche 8 des Sensorelementes 3 zur Anlage kommt. Die Prallfläche 8 bildet in der Montagelage eine Innenwandung des Leitungsabschnitts 1. Benachbart zu der Prallfläche 8 ist ein scheibenförmiges Piezoelement 9 angeordnet, an das sich ein scheibenförmiger Dämmkörper 10 und eine Kontaktierungsscheibe 11 anschließen. Die Prallfläche 8, das Piezoelement 9, der Dämpfungskörper 10 und die Kontaktierungsscheibe 11 sind in dem Bohrungshals 6 angeordnet. Als Abschluss kann außenseitig ein mit einem Innengewinde versehenes Festlegelement 12 auf den Bohrungshals 6 aufgesetzt angeordnet sein, wobei es mit einem Außengewinde 13 des Bohrungshalses 6 in Gewindeeingriff steht.

Als Abschluss des Sensorelementes 3 ist außenseitig, d. h. auf einer der Leitung 1 abgewandten Seite, vorzugsweise ein in Gewindeeingriff mit dem Bohrungshals 6 stehendes Festlegelement 12 vorgesehen. Das Festlegelement 12 ist bolzenförmig ausgebildet und kann ein Außengewinde aufweisen, das mit einem Innengewinde des Bohrungshalses 6 in Gewindeeingriff steht. Durch Eindrehen des Festlegelementes 12 in den Bohrungshals 6 werden die zwischen dem Festlegelement 12 und der Prallfläche 8 angeordneten Bauelemente 9, 10, 11 des Sensorelementes 3 verspannt bzw. in Axialrichtung zusammengedrückt, so dass sie in der Montagelage mechanisch und/oder elektrisch miteinander verbunden sind. Das Festlegelement 12 befindet sich in der Montagelage des Sensorelementes vorzugsweise in einer Arretierposition.

Das Festlegelement 12 dient als starrer Basiskörper, der in Montagerichtung R auf die sich anschließenden Bauelemente 8, 9, 10, 11 des Sensorelementes 3 drückt. Das Festlegelement 12 kann beispielsweise als ein Gewindebolzen, wie in Figur 1 dargestellt, oder als eine Überwurfmutter/-kappe ausgebildet sein.

Der Bohrungshals 6 weist über seine gesamte Länge einen konstanten Durchmesser auf, so dass die zu verpressenden Bauelemente des Sensorelementes 3, nämlich die Prallfläche 8, das Piezoelement 9, der Dämpfungskörper 10 und die Kontaktierungsscheibe 11 mit einer Passung eingesetzt werden können, so dass benachbarte Bauelemente des Sensorelementes 3 in der Montagelage flächig aneinanderliegen. Die einzuspannenden Bauelemente des Sensorelementes 3 weisen jeweils einen gleichen Außendurchmesser auf, so dass sie mit einer Passung in den Bohrungshals 6 einsetzbar sind. Der Bohrungshals 6 weist deswegen einen Innendurchmesser auf, der etwas größer ist als ein Außendurchmesser der einzuspannenden Bauelemente 8, 9, 10, 11 des Sensorelementes 3.

Zur Bereitstellung eines elektrischen Anschlusses für das Piezoelement 9, ohne dass das Messergebnis beeinträchtigt wird, besteht der Dämpfungskörper 10 vorzugsweise aus einem nachgiebigen bzw. flexiblen bzw. gummiartigen Material. Lediglich die leitfähigen Partikel in diesem Material sind nicht flexibel, sondern starr ausgebildet. Der Dämpfungskörper 10 ist scheibenförmig ausgebildet und weist ein zentrales erstes Verbindungselement 14 auf, das aus einem elektrischen leitenden Material besteht und kreisförmig ausgebildet ist. In radialer Richtung nach außen schließt sich an den ersten Verbindungselement 14 ein kreisringförmiges Gummielement 15 an, das gegenüber der Prallfläche 8 bzw. dem Piezoelement 9 dämpfend wirkt. Zugleich bildet das Gummielement 15 eine elektrische Isolierung zwischen dem ersten Verbindungselement 14 und einem sich in radialer Richtung nach außen anschließenden vorzugsweise kreisringförmigen zweiten Verbindungselement 16 des Dämpfungskörpers 10, das aus einem elektrisch leitenden Material besteht. Die Elemente 14, 15, 16 erstrecken sich im Wesentlichen als eine gemeinsame elastische Platte, die eine dämpfende Wirkung auf das Piezoelement ausüben.

Die Kontaktierungsscheibe 11 weist im zentralen Bereich ein kreisförmiges erstes Anschlusselement 17 auf, das aus einem elektrisch leitenden Material besteht. In radialer Richtung nach außen schließt sich ein kreisringförmiges Isolierelement 18 an, das vorzugsweise starr, aber auch nachgiebig ausgebildet sein kann. In radialer Richtung schließt sich an das Isolierelement 18 nach außen ein zweites Anschlusselement 19 an, das kreisringförmig und elektrisch leitend ausgebildet ist. Auf einer dem Inneren des Leitungsabschnitts 1 abgewandten Seite sind das erste Anschlusselement 17 und das zweite Anschlusselement 19 der Kontaktscheibe 11 mit nicht dargestellten elektrischen Zuführleitungen verbunden, die über einen Durchbruch 20 des Festlegelementes 12 nach außen geführt sind. Der Durchbruch 20 kann ein Innengewinde aufweisen, so dass die elektrische Zuführleitung an dem Festlegelement 12 verschraubt werden kann. Die Anschlussleitungen können mit einer nicht dargestellten Signalverarbeitungseinrichtung verbunden sein, so dass die Impulssignale des Piezoelementes 9 zur Zählung der auf die Prallfläche 8 auftreffenden Masseteilchen berechnet werden können. Bezüglich des Aufbaus der Signalverarbeitungseinrichtung wird auf die DE 10 2009 051 942 A1 verwiesen, deren Offenbarung Bestandteil dieser Anmeldung sein soll.

Das erste Verbindungselement 14 des Dämpfungskörpers 10 weist vorzugsweise einen größeren Durchmesser d_{D1} auf als ein Durchmesser d_{K1} des ersten Anschlusselementes 17 der Kontaktierungsscheibe 11. Das erste Verbindungselement 14 überdeckt somit in der Montagelage das erste Anschlusselement 17 und ermöglicht eine sichere Kontaktierung. Zur Kurzschlussvermeidung ist der Durchmesser d_{K1} des ersten Anschlusselementes 17 kleiner als ein Innendurchmesser des Verbindungselementes 16 des Dämpfungskörpers 10. Ein Innendurchmesser des zweiten Anschlusselements (9 der Kontaktierungsscheibe 11 ist größer als ein Durchmesser d_{D1)} des ersten Verbindungselements 14 des Dämpfungskörpers 10 ausgebildet, so dass kein Kurzschluss entstehen kann. Ein Durchmesser d_{D1} des ersten Verbindungselements 14 des Dämpfungskörpers 10 ist kleiner als ein Innendurchmesser des zweiten Anschlusselementes 22 des Piezoelementes 9.

Die Prallfläche 8, das Piezoelement 9, der Dämpfungskörper 10 und die Kontaktierungsscheibe 11 bilden jeweils Einlegeteile, die in den Bohrungshals 6 eingesetzt und in der Montagelage verpresst angeordnet sind. Der Außendurchmesser aller Einlegeteile, in der Figur 2 mit d_{P2} (Piezoelement 9), d_{D2} (Dämpfungsplatte) und d_{K2} (Kontaktierungsscheibe 11) bezeichnet, ist an den Innendurchmesser des Bohrungshalses 6 angepasst. Die Einlegeteile 8, 9, 10, 11 können ohne Verkanten und quasi ohne Passung montagefreundlich eingelegt werden.

Im vorliegenden Ausführungsbeispiel ist ein Außendurchmesser d_{K2} des zweiten Anschlusselementes 19 gleich einem Außendurchmesser d_{D2} des zweiten Verbindungselementes 16. Ferner ist der Innendurchmesser d_{K2} des zweiten Anschlusselementes 19 gleich zu einem Innendurchmesser d_{D2} des zweiten Verbindungselementes 16. Das zweite Verbindungselement 16 und das zweite Anschlusselement 19 weisen somit die gleiche radiale Erstreckung auf. Dadurch, dass die Bauelemente des Sensorelementes 3, nämlich das Piezoelement 9, der Dämpfungskörper 10 und die Kontaktierungsscheibe 11 koaxial zueinander angeordnet sind, überdecken sich das zweite Verbindungselement 16 und das zweite Anschlusselement 19 der Kontaktierungsscheibe 11.

Das Piezoelement 9 weist auf einer dem Inneren des Leitungsabschnitts 1 abgewandten Seite ein vorzugsweise kreisförmiges erstes Anschlusselement 21 mit einem Durchmesser d_{P1} und ein sich in radialer Richtung anschließendes zweites Anschlusselement 22 mit einem Durchmesser d_{P2} auf, das kreisringförmig ausgestaltet ist. Die beiden Anschlusselemente 21, 22 sind selbstverständlich an ihrer Grenzfläche durch einen nicht dargestellten Isolierungsring voneinander elektrisch isoliert angeordnet. Das zweite Anschlusselement 22 liegt in der Montagelage elektrisch leitend an dem zweiten Verbindungselement 16 der Dämpfungsscheibe 10 an.

Der Durchmesser d_{D1} des Verbindungselementes 14 und der Durchmesser d_{K1} der Kontaktierungsscheibe 11 sind jeweils kleiner als der Durchmesser d_{P1} des ersten Anschlusselementes 21 des Piezoelementes 9.

Das Gummielement 15 bildet einen solchen radialen Zwischenraum zwischen dem ersten Verbindungselement 14 und dem zweiten Verbindungselement 16, so dass das erste Verbindungselement 14 nicht in Kontakt mit dem zweiten Anschlusselement 22 des Piezoelementes 9 kommen kann. Bspw. können entgegen der Montagerichtung R die inneren Kontaktierungsflächen bzw. Anschlussflächen der Einlegeteile 9, 10, 11 schichtweise reduziert ausgebildet sein. Es wird eine sichere Isolierung bei möglichst geringem Kontaktwiderstand geschaffen. Durch flächige Anlage der Anschlusselemente 17, 19, 21, 22 bzw. Verbindungselemente 14, 16 des Piezoelementes 9, des Dämpfungsträgers 10 und der Kontaktierungsscheibe 11 wird eine montagefreundliche und betriebssichere elektrische Anschlussführung des Piezoelementes 9 nach außen geschaffen.

Wie besonders gut aus Figur 1 ersichtlich ist, besteht der Leitungsabschnitt 1 aus dem Zuführungsabschnitt 31, dem stromabwärts gelegenen Weiterleitungsabschnitt 32 und dem zwischen denselben angeordneten Umlenkungsabschnitt 2. In einem Außenbereich 5 des winkelförmigen Umlenkungsabschnittes 2 ist der Bohrungshals 6 angeordnet. Der Zuführungsabschnitt 31 verjüngt sich in Strömungsrichtung S. Vorzugsweise ist der Zuführungsabschnitt 31 konusförmig unter Verringerung seines Querschnitts in Strömungsrichtung S ausgebildet. Wandungen des Zuführungsabschnitts 31 sind so geformt, dass die im Luftstrom geführten Masseteilchen bzw. Saatkörner unter einer im Vergleich zum geraden Leitungsabschnitt 1 erhöhten Geschwindigkeit auf die Prallfläche 8 treffen. Die Prallfläche 8 ist vorzugsweise eben ausgebildet. Eine Mittelachse M_{Z} des Zuführungsabschnitts 31 schließt einen spitzen Winkel α mit der Prallfläche 8 ein. Eine Mittelachse M_{W} des Weiterleitungsabschnitts 32 schließt einen spitzen Winkel β mit der Prallfläche 8 ein. Der Weiterleitungsabschnitt 32 weist in Strömungsrichtung S einen konstanten Durchmesser oder vorzugsweise einen sich in Strömungsrichtung S vergrößernden Durchmesser auf, so dass Druckverluste minimiert werden können. Durch die verjüngende Ausbildung des Zuführungsabschnitts 31 wird eine gezielte Strömungsführung der Masseteilchen in Richtung der Prallplatte 8 bewirkt, so dass alle Masseteilchen nur ein einziges Mal mittels des Sensorelementes 3 detektiert werden. Die verjüngende Anordnung des Zuführungsabschnitts 31 bewirkt insbesondere, dass die Masseteilchen nur in einem bestimmten Winkelbereich um den Winkel α herum auf die Prallfläche 8 auftreffen und dann nur in einem bestimmten Winkelbereich um den Austrittswinkel β herum in Richtung des Weiterleitungsabschnitts 32 umgelenkt werden. Eine gezielte Umlenkung des die Masseteilchen enthaltenen Luftstroms mit einem Eintrittswinkelbereich und einem Austrittswinkelbereich bewirkt eine definierte Detektion der Masseteilchen, ohne dass sich Masseteilchen mit dem Luftstrom an der Prallfläche 8 vorbeibewegen.

Nach einer nicht erfindungsgemäßen alternativen Ausführungsform kann der Umlenkwinkel ϕ zwischen dem Zuführungsabschnitt 31 und dem Weiterleitungsabschnitt 32 auch ein rechter Winkel oder ein spitzer Winkel sein.

Der Zuführungsabschnitt 31 verjüngt sich in Strömungsrichtung S über eine axiale Länge I, die in einem Bereich zwischen 3cm und 6cm liegen kann, von einem Innendurchmesser s1 gleich 30mm auf einen Innendurchmesser s2 von 20mm. Ein Verjüngungswinkel γ beträgt somit bei einer Länge I von 3cm etwa 9°. Vorzugsweise ist der Zuführungsabschnitt 31 so verjüngend ausgebildet, dass der Verjüngungswinkel γ in einem Bereich zwischen 4° und 10° liegt.

Vorzugsweise besteht der Bohrungshals 6 aus einem nachgiebigen Material. Auch der weitere Bestandteil des Leitungsabschnittes 1 einschließlich des Zuführungsabschnittes 31, des Weiterleitungsabschnittes 32 und des Umlenkungsabschnittes 32 besteht aus einem nachgiebigen Kunststoffmaterial. Vorteilhaft wird hierdurch verhindert, dass sich Körperschallschwingungen von einem stromaufwärts angeordneten Hauptstromverteiler in Richtung des Piezoelementes 9 ausbreiten können. Es findet hierdurch quasi eine Schwingungsentkopplung des Piezoelementes 9 bzw. der Prallplatte 8 zu dem Leitungsabschnitt 1 statt.

## Patentansprüche

1. Vorrichtung zum Erfassen von Masseteilchen in leitungsgeführten Luftströmen, insbesondere von auszubringendem Saatgut in Sämaschinen, mit einer Leitung (1), durch die der die Masseteilchen enthaltenen Luftstrom geführt wird, mit einem an der Leitung (1) angeordneten Sensorelement (3), wobei das Sensorelement (3) ein
- Piezoelement (9), eine auf einer dem Inneren der Leitung (1) zugewandten Seite des Piezoelementes (9) angeordnete Prallfläche (8), und
- einen auf einer dem Inneren der Leitung abgewandten Seite des Piezoelementes (9) angeordneten starren Basiskörper (12) aufweist, wobei das Sensorelement (3) in einem Umlenkungsabschnitt (2) der Leitung (1) angeordnet ist und ein stromaufwärts angeordneter Zuführungsabschnitt (31) der Leitung (1) sich in Strömungsrichtung (S) derart verjüngt, dass im Wesentlichen alle in dem Zuführungsabschnitt (31) geförderten und zu detektierenden Masseteilchen einmal auf die Prallfläche (8) des Sensorelementes (3) treffen, **dadurch gekennzeichnet, dass** auf einer dem Inneren der Leitung (1) abgewandten Seite des Piezoelementes (9) ein Dämpfungskörper (10) angeordnet ist und dass der Zuführungsabschnitt (31) und ein sich stromabwärts des Sensorelementes (3) erstreckender Weiterleitungsabschnitt (32) der Leitung (1) einen stumpfen Öffnungswinkel (ϕ) einschließen.

2. Vorrichtung nach Anspruch 1, **dadurch gekennzeichnet, dass** sich der Weiterleitungsabschnitt (32) in Strömungsrichtung erweitert und in diesen die auf die Prallfläche (8) des Sensorelementes (3) auftreffenden Masseteilchen von derselben umgelenkt werden.

3. Vorrichtung nach Anspruch 1 oder 2, **dadurch gekennzeichnet, dass** der Zuführungsabschnitt (31) der Leitung (1) konusförmig verläuft.

4. Vorrichtung nach einem der Ansprüche 1 bis 3, **dadurch gekennzeichnet, dass** das Sensorelement (3) an einem Außenabschnitt (5) des Umlenkungsabschnittes (2) angeordnet ist, wobei die Prallfläche (8) eben ausgebildet ist und eine Innenwandung der Leitung (1) bildet, und dass eine Längsachse (Mz) des Zuführungsabschnitts (31) und einer Mittelachse (Mw) des Weiterleitungsabschnitts (32) jeweils unter einem spitzen Winkel (α, β) zu der Prallplatte (8) verlaufen.

5. Sämaschine mit einem Saatgutspeicher, mit einer Ausbringungseinheit zum Ausbringen von Saatgut aus dem Saatgutspeicher und mit einem Saatgutleitungssystem enthaltend einen Hauptstromverteiler und/oder mindestens eine Saatgutleitung, die mit einer Vorrichtung nach wenigstens einem der Ansprüche 1 bis 4 ausgestattet ist.

## Claims

1. A device for detecting mass particles in conducted airflows, in particular for seeds to be distributed in seed drills, having a conduit (1) through which the air stream comprising the mass particles is delivered, having a sensor element (3) arranged on the conduit (1), wherein the sensor element (3) has
- a piezo element (9), an impact surface (8) arranged on a side of the piezo element (9) facing the inside of the conduit (1),
and
- a rigid base body (12) arranged on a side of the piezo element (9) facing away from the inside of the conduit, wherein
the sensor element (3) is arranged in a deflection portion (2) of the conduit (1) and a feed portion (31) of the conduit (1) arranged upstream tapers in the flow direction (S) such that substantially all mass particles in the feed portion (31) which are passing through and are to be detected collide with the impact surface (8) of the sensor element (3) once, **characterized in that**
a damping body (10) is arranged on a side of the piezo element (9) facing away from the inside of the conduit (1) and **in that** the feed portion (31) and a forwarding portion (32) of the conduit (1) extending downstream from the sensor element (3) enclose an obtuse opening angle (ϕ).

2. The device according to Claim 1, **characterized in that** the forwarding portion (32) expands in the flow direction and the mass particles colliding with the impact surface (8) of the sensor element (3) are deflected by said impact surface into said forwarding portion.

3. The device according to Claim 1 or 2, **characterized in that** the feed portion (31) of the conduit (1) extends conically.

4. The device according to any one of Claims 1 to 3, **characterized in that** the sensor element (3) is arranged on an outer portion (5) of the deflection portion (2), wherein the impact surface (8) is designed to be flat and forms an inner wall of the conduit (1), and **in that** a longitudinal axis (Mz) of the feed portion (31) and a central axis (Mw) of the forwarding portion (32) each run at an acute angle (α,β) relative to the impact surface (8).

5. A seed drill having a seed store, having a distribution unit for distributing seeds from the seed store, and having a seed conducting system comprising a main power distributor and/or at least one seed conduit which is equipped with a device according to at least one of the Claims 1 to 4.

## Revendications

1. Dispositif de détection des corpuscules dans des flux d'air dirigés dans des conduites, en particulier des semences à récupérer dans des semoirs, comprenant une conduite (1), à travers laquelle le flux d'air contenant les corpuscules est dirigé, comprenant un élément de capteur (3) disposé sur la conduite (1), dans lequel l'élément de capteur (3) présente
- un élément piézoélectrique (9), une surface d'impact (8) disposée sur un côté de l'élément piézoélectrique (9) en regard de l'intérieur de la conduite (1), et
- un corps de base rigide (12) disposé sur un côté de l'élément piézoélectrique (9) opposé à l'intérieur de la conduite,
dans lequel l'élément de capteur (3) est disposé dans une section de déviation (2) de la conduite (1) et une section d'alimentation (31) de la conduite (1) disposée en amont se rétrécit dans la direction d'écoulement (S) de telle sorte que sensiblement tous les corpuscules transportés dans la section d'alimentation (31) et qui doivent être détectés tombent une fois sur la surface d'impact (8) de l'élément de capteur (3), **caractérisé en ce que**
sur un côté de l'élément piézoélectrique (9) opposé à l'intérieur de la conduite (1), un corps d'amortissement (10) est disposé et **en ce que** la section d'alimentation (31) et une section de transfert (32) de la conduite (1) qui s'étend en aval de l'élément de capteur (3) renferment un angle d'ouverture obtus (ϕ).

2. Dispositif selon la revendication 1, **caractérisé en ce que** la section de transfert (32) s'élargit dans la direction d'écoulement et dans celle-ci les corpuscules tombant sur la surface d'impact (8) de l'élément de capteur (3) sont déviés par celle-ci.

3. Dispositif selon la revendication 1 ou 2, **caractérisé en ce que** la section d'alimentation (31) de la conduite (1) s'étend en forme de cône.

4. Dispositif selon une des revendications 1 à 3, **caractérisé en ce que** l'élément de capteur (3) est disposé sur une section extérieure (5) de la section de déviation (2), dans lequel la surface d'impact (8) est réalisée plane et forme une paroi intérieure de la conduite (1), et **en ce qu'**un axe longitudinal (Mz) de la section d'alimentation (31) et un axe central (Mw) de la section de transfert (32) s'étendent respectivement à angle aigu (α, β) par rapport à la surface d'impact (8).

5. Semoir comprenant un stockage de semences, comprenant une unité de récupération destinée à récupérer des semences à partir du stockage de semences et comprenant un système de conduites de semences contenant un distributeur de courant principal et/ou au moins une conduite de semences, qui est équipé d'un dispositif selon au moins une des revendications 1 à 4.
